Europäisches Patentamt

(19) European Patent Office    (11) Veröffentlichungsnummer: **0 010 185**
**B1**
Office européen des brevets

(12) **EUROPÄISCHE PATENTSCHRIFT**

(45) Veröffentlichungstag der Patentschrift:    (51) Int. Cl.³: **G 06 F 13/00**
04.08.82

(21) Anmeldenummer: 79103598.3

(22) Anmeldetag: 24.09.79

(54) Virtuell-Adressiervorrichtung für einen Computer.

(30) Priorität: 23.10.78 US 953676    (73) Patentinhaber: **International Business Machines
Corporation, Armonk, N.Y. 10504 (US)**

(43) Veröffentlichungstag der Anmeldung:
30.04.80 Patentblatt 80/9    (72) Erfinder: **Mitchell, Glen Robert, Rt. 1, Pine Island,
MN 55963 (US)**
Erfinder: **Soltis, Frank Gerald, 2804 Mayowood Hills Dr.,
S.W. Rochester, MN 55901 (US)**
(45) Bekanntmachung des Hinweises auf die Patenterteilung:    Erfinder: **Hoffman, Roy Louis, Rt. 2, Pine Island,
MN 55963 (US)**
04.08.82 Patentblatt 82/31

(84) Benannte Vertragsstaaten:
**DE FR GB**    (74) Vertreter: **Möhlen, Wolfgang C., Dipl.-Ing.,
Säumerstrasse 4, CH-8803 Rüschlikon (CH)**

(56) Entgegenhaltungen:
**US-A-3 761 885
US-A-3 938 096
US-A-3 976 976
Intel Mikrocomputer Systems Data Book, 1976,
S. 3-3 bis 3-4, 3-9 bis 3-12 und 4-11;
Herbert Bernstein, »Hochintegrierte Digitalschal-
tungen und Mikroprozessoren«, 1978, S. 424 und
425;
Motorola-Semiconductors, MC 10.801, ADI-410,
1976, S. 1 bis 15**

## Virtuell-Adressiervorrichtung für einen Computer

Die Erfindung bezieht sich auf eine Virtuell-Adressiervorrichtung gemäß Oberbegriff des Patentanspruchs 1.

### Stand der Technik

Die Verwendung virtueller Speicher in Computern läßt es wünschenswert erscheinen, große virtuelle Adressen zu benützen. Die Adresse soll nicht nur genügend Bits umfassen, um den Hauptspeicher zu adressieren, sondern soll auch auf die Sekundärspeicher, Platten, Trommeln, Magnetblasenspeicher etc. hinweisen können. Bisher wurden breite virtuelle Adressen hauptsächlich in Computern verwendet, die eine Verarbeitungseinheit mit breiten Datenkanälen, eine breite arithmetische Einheit und breite Speicherregister aufwiesen. Die Breite bezieht sich dabei auf die Anzahl der verfügbaren Bits pro Register- respektive Speicherplatz. Bei kleinen Computern steigt bei derartiger Breite der Maschinenpreis unerträglich. Es ist daher üblich, in kleinen Computern schmale Datenkanäle, eine schmale Verarbeitungseinheit und schmale integrierte Speicherschaltungen vorzusehen und Mehrfachdurchgänge auszuführen, um Adressen verarbeiten zu können, die breiter als die verfügbaren Kanäle, Register etc. sind. Diese Mehrfachdurchgänge beeinflussen die Leistungsfähigkeit erheblich, und die Verarbeitung breiter Adressen ist daher unbequem.

In der US-A-3 938 096 ist auch eine Virtuell-Adressiervorrichtung mit den im Oberbegriff des PA 1 angegebenen Merkmalen beschrieben. Insbesondere sind dort die Segmentadressen- und Distanzadressenteile in Basisregistern gespeichert, die vom Instruktionsregister adressiert werden. Der Distanzadreßteil und der Segmentadreßteil der gebildeten virtuellen Adresse werden in getrennten Registern gespeichert. Die Möglichkeit, die vom Instruktionsregister adressierten, einander entsprechenden Segmentadressenteile in eigenen Segmentregistern und die Distanzadreßteile in hiervon getrennten Distanzregistern zu speichern, wobei die Bauart von Distanz- und Segmentregistern unterschiedlich sein kann, sowie eine Reduzierung der Kapazität von Baueinheiten, wie z. B. der Recheneinheit, sind dort nicht dargestellt. Außerdem ist dort eine Zwischenspeicherung des Distanzadreßteils aus dem Basisregister und eines Versetzungsteils aus dem Instruktionsregister vor deren Zuführung zum Addierer zwecks Bildung des Distanzadreßteils der virtuellen Adresse vorgesehen.

Aus der US-A-3 976 976 ist es bekannt, Adressen aus zwei Registerinhalten zusammenzusetzen.

### Erfindung und deren Vorteile

Aufgabe der in den Patentansprüchen gekennzeichneten Erfindung ist es, eine Virtuell-Adressiervorrichtung anzugeben, die trotz schmaler arithmetischer Mittel und teilweise schmaler und billiger Register und Sammelleitungen die Bereitstellung einer breiten virtuellen Adresse in möglichst wenig Operationsschritten und ohne zusätzliche Speicherzugriffe erlaubt.

Die vorliegende Erfindung vermeidet somit die Leistungseinbuße bei der Verarbeitung breiter virtueller Adressen auf kleinen Computern. Die Verarbeitung breiter virtueller Adressen wird dadurch erleichtert, daß die Basisadreßregister in Segmentregister und Distanzregister unterteilt werden, wodurch die Notwendigkeit, den Segmentteil der virtuellen Adresse in arithmetischen Operationen mitzuverarbeiten, entfällt. Derart sind schmale Datenkanäle, eine schmale Verarbeitungseinheit, schmale integrierte Speicher etc. möglich, ohne daß bei Verarbeitung breiter virtueller Adressen auf einem kleinen Computer die Leistungsfähigkeit beeinträchtigt wird.

Eine Überlaufschaltung in der Verarbeitungseinheit stellt fest, ob ein Überlauf aus dem Distanzteil des Segments infolge der Operation vorliegt und signalisiert dementsprechend einen Fehler. Ein Überlauf kommt vor, wenn versucht wird, über eine Segmentgrenze hinaus zu adressieren. Dies wird als Fehler der segmentierten Virtuellspeicherstruktur betrachtet.

Um Daten oder Instruktionen im Hauptspeicher zu adressieren, wird der Distanzteil der Adresse von der Verarbeitungseinheit auf den Virtuelladressenumformer übertragen. Gleichzeitig wird der Segmentteil der virtuellen Adresse vom zuständigen Segmentregister abgelesen und auf den Virtuelladressenumformer übertragen. Der Umformer übersetzt die vollständige virtuelle Adresse und veranlaßt, daß die Daten im Hauptspeicher geschrieben oder abgelesen werden.

Adressieroperationen, wie das Inkrementieren oder Dekrementieren, werden daher in einem einzigen Zyklus über den schmalen Datenkanal der Verarbeitungseinheit bewältigt. Auch der Hauptspeicher wird in einem einzelnen Zyklus adressiert, weil der Distanz- und der Segmentteil der virtuellen Adresse parallel übertragen werden. Die Leistungsfähigkeit bei Benützung schmaler Datenkanäle gemäß der Erfindung ist daher mit der Leistungsfähigkeit, die mit breiten Datenkanälen möglich wäre, zu vergleichen.

Ein weiterer Vorteil der Erfindung liegt darin, daß Segmentregister benützt werden können, die langsamer arbeiten und daher billiger sind. Die Anlagekosten können also ohne wesentliche Leistungseinbuße reduziert werden. Eine breite Adresse kann in einem kleinen Computer verwendet werden ohne Leistungseinbuße, obwohl die Kanalbreite der Verarbeitungseinheit, der integrierten Speicher etc. nur schmal ist.

Nachfolgend sollen Ausführungsbeispiele der Erfindung anhand der Zeichnungen im einzelnen dargelegt werden.

### Die Zeichnungen

Fig. 1A zeigt ein Computersystem, das breite virtuelle Adressen verwendet.

Fig. 1B zeigt ein Computersystem mit schmalen Kanälen, das breite virtuelle Adressen verwendet.

Fig. 2 zeigt den unterteilten Datenfluß gemäß der Erfindung.

Fig. 3 zeigt eine Ausführung der Erfindung.

### Detailbeschreibung

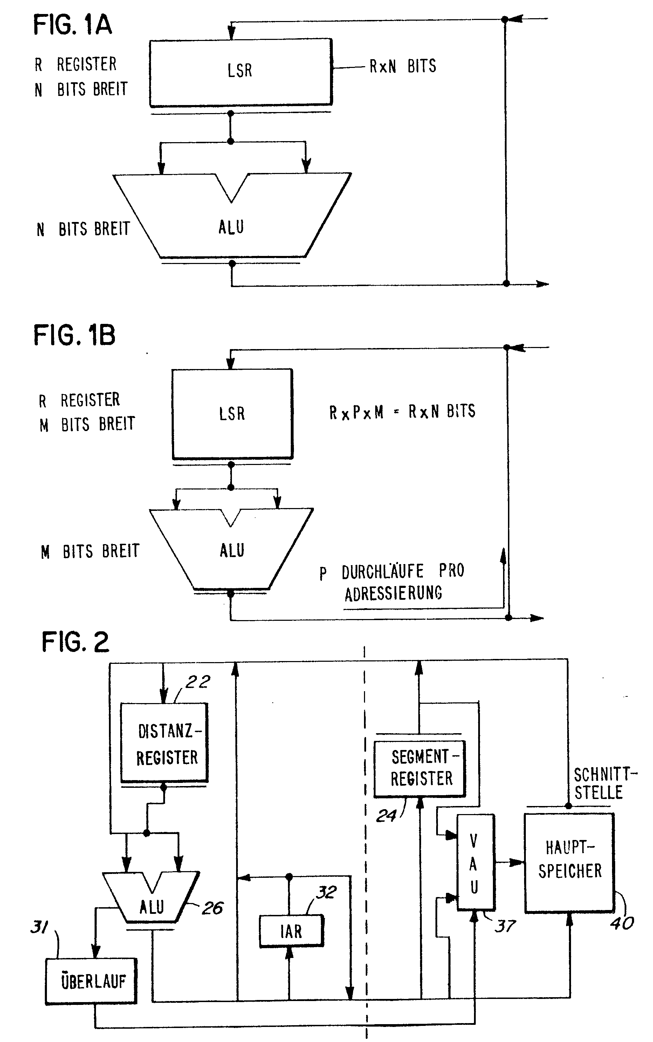

Fig. 1A zeigt die übliche Ausführung einer Recheneinheit ALU und von Registern LSR für breite virtuelle Adressen. Alle Kanäle müssen gleich breit sein wie die vollständige virtuelle Adresse. Da der apparative Aufwand für eine derartige Ausführung bei kleinen Computern zu groß ist, ist es üblich, schmale Kanäle, eine schmale ALU etc. zu benützen und Mehrfachdurchgänge durch die Recheneinheit vorzusehen, wie dies Fig. 1B zeigt. Diese Lösung bedeutet eine wesentliche Herabsetzung der Leistungsfähigkeit. Die Erfindung sieht die Leistungsfähigkeit der Lösung gemäß Fig. 1A bei einem apparativen Aufwand vergleichbar der Lösung gemäß Fig. 1B vor.

Wie die gestrichelte Linie in Fig. 2 zeigt, umfaßt der Datenfluß gemäß der Erfindung einen Teil, der zur Recheneinheit gehört, und einen anderen Teil, der zur Hauptspeicherschnittstelle gehört. Gemäß der Erfindung werden breite virtuelle Adressen unterteilt in einen Segmentteil und einen Distanzteil, wobei die Bits des Segmentteils der virtuellen Adresse das Segment und die Bits im Distanzteil das Byte innerhalb des Segments bezeichnen. So kann z. B. eine virtuelle Adresse total 40 Bits umfassen, wovon 24 Bits das Segment und 16 Bits die Distanz, d. h., das bestimmte Byte innerhalb des Segments, kennzeichnen. Eine vollständige virtuelle Adresse kann also in einem 16-Bit-Distanzregister und zusätzlich einem 24-Bit-Segmentregister gespeichert werden. Der Datenfluß in der zentralen Recheneinheit, wie ihn Fig. 2 zeigt, besteht aus Distanzregistern 22, der Recheneinheit 26, dem Instruktionsadreßregister 32 und den zugehörigen Datenkanälen, die alle nur so breit zu sein brauchen wie der Distanzteil der virtuellen Adresse. Der Datenfluß an der Hauptspeicherschnittstelle benötigt, wie in Fig. 2 dargestellt, Segmentregister 24, einen Virtualadressenumformer 37, der noch näher zu beschreiben ist, und einen Hauptspeicher 40. Dank der Unterteilung der virtuellen Adresse genügen schmalere Datenkanäle und eine schmalere ALU, da der Segmentteil an den arithmetischen Operationen nicht teilnimmt. Die Segmentregister 24 können demzufolge langsamer, d. h. billiger, ausgeführt sein wie die Distanzregister 22, ohne die Leistungsfähigkeit der zentralen Verarbeitungseinheit zu beeinflussen.

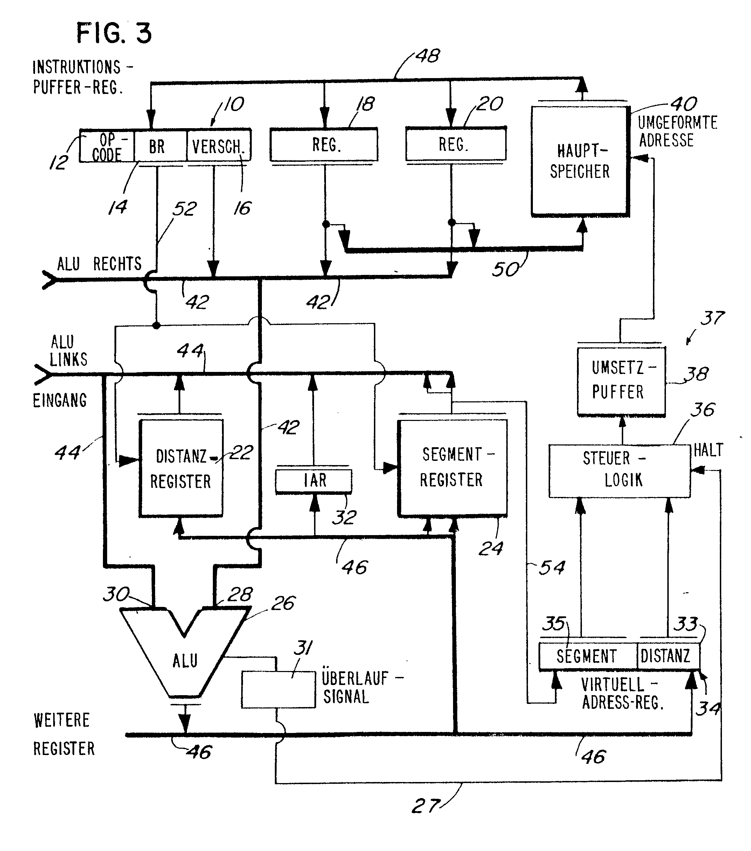

Eine Ausführungsart der Erfindung ist in Fig. 3 dargestellt. Hier nimmt ein Instruktionspuffer 10 die gegenwärtig zu verarbeitende Instruktion auf. Jede Instruktion besteht aus zwei Hauptteilen, dem Operationscode, der die auszuführende Operation bezeichnet, und der Bezeichnung der Operanden. Der Operationscode wird hier durch die Bits im Feld 12 bezeichnet, die Operanden werden bezeichnet durch die Basisregisterbits 14 und die im Verschiebungsfeld 16 gespeicherten Verschiebungsbits. Der Datenkanal 48 bildet eine Verbindung vom Hauptspeicher 40 zum Instruktionspufferregister 10. Das Verschiebungsfeld 16 ist mit der ALU 26 über den rechten Eingangskanal 42 verbunden. Das BR-Feld 14 ist über die Leitung 52 mit den Distanzregistern 22 und den Segmentregistern 24 verbunden.

Die Speicherpufferregister 18 und 20 speichern Daten während der Ausführung einer Instruktion und sind mit dem Hauptspeicher 40 über Kanäle 48 und 50 verbunden. Die Register sind auch mit ALU 26 über Kanal 42 verbunden. Die Basisadressen, die die Zonen des Hauptspeichers zur Ausführung der Instruktionen adressieren, werden in Distanz- und Segmentteile zerlegt. Die Basisadreßregister bestehen daher aus Distanzregistern 22, die den Distanzteil der Basisadreßregister umfassen, und aus Segmentregistern 24, die den Segmentteil umfassen. Die Distanzregister 22 und Segmentregister 24 stehen mit der ALU über deren linke Eingangsleitung 44 in Verbindung. Es ist zu bemerken, daß, wenn der Segmentteil breiter ist als die Distanzregister 22 und die ALU 26, zum Laden der Segmentregister Mehrfachdurchgänge erforderlich sind, um den Inhalt eines Segmentregisters 24 über die Recheneinheit zu leiten. Die Segmentregister 24 sind auch mit dem Segmentteil des Virtuelladressenregisters VAR 34 über den Kanal 54 verbunden.

Die arithmetische und logische Einheit 26, die einen rechten Eingang 28 und einen linken Eingang 30 aufweist, besorgt die arithmetischen und logischen Operationen mit einem oder zwei Eingangsoperanden. Der Datenkanal 42 führt zum rechten Eingang 28 der ALU, der Datenkanal 44 führt zum linken Eingang 30. Der Datenkanal 46 führt vom Ausgang der ALU 26 zum Distanzteil 33 des Virtuelladressenregisters 34, den Segmentregistern 24, dem Instruktionsadreßregister IAR 32 und den Distanzregistern 22. Dank der Überlaufschaltung 31 kann die ALU 26 einen Überlaufzustand feststellen, wie noch nachfolgend dargelegt wird.

Das Instruktionsadreßregister 32, das schmaler als die virtuelle Adresse ist und den schmalen Datenfluß der zentralen Verarbeitungseinheit aufnehmen kann, enthält die Adresse der laufenden Instruktion. Während des Programmablaufs wird die Instruktion von der bezeichneten Stelle mittels der Instruktionsadresse im IAR 32 geholt und in das Instruktionspufferregister 10 gesetzt. Die Instruktionsadresse kommt dann über den linken Eingang 44 und ALU 26, wo sie inkrementiert wird, zurück in IAR 32 über den Kanal 46, um die nächste Instruktion der Folge zu adressieren. Die Instruktion wird ausgeführt, und die gleichen Schritte werden wiederholt mit dem neuen Wert der Instruktionsadresse im Register 32. Die Art und Weise, nach der der Computer die einzelnen Instruktionen des Programms ausführt, ist nicht Teil der Erfindung.

Im Virtuelladressenregister 34 wird eine volle virtuelle Adresse vor der Umformung zur Hauptspeicheradresse im Virtuelladressenumformer 37 zusammengesetzt. Die Umformung der virtuellen Adresse ist nötig, weil diese einen größeren Speicherraum als den des Hauptspeichers 40 adressiert. Zum Virtuelladressenumformer 37 gehört das Virtuelladressenregister 34, die Steuerlogik 36 und ein Umsetzpuffer 38. Der Umsetzpuffer 38 besorgt zusammen mit der Steuerlogik 36 die Umsetzung. Diese Schaltkreise sind an sich bekannt und nicht Teil dieser Erfindung. Der Hauptspeicher 40 enthält die zur Ausführung des Programms benötigten Instruktionen und Operanden.

Nachfolgend wird die Ausführung der Instruktion, einen Operanden vom Hauptspeicher 40 zu holen, beschrieben. Es sei angenommen, daß eine Instruktion vom Hauptspeicher 40 bereits geholt und ins Instruktionspufferregister 10 gesetzt wurde. Die Instruktionsadresse im IAR 32 wird über die ALU 26 inkrementiert und zurück in das IAR 32 geschrieben. Die Instruktionsdecodierlogik, die nicht dargestellt ist, bestimmt, daß ein Operand vom Hauptspeicher 40 zu holen ist. Die Arbeitsweise der Instruktionsdecodierlogik ist nicht Teil der vorliegenden Erfindung.

Die Adresse des vom Hauptspeicher 40 zu holenden Operanden wird von der ALU 26 berechnet durch Addieren des im Basisregisterfeld 14 bezeichneten Distanzteils im Distanzregister zu dem Verschiebungswert im Verschiebungsfeld 16 der Instruktion im Instruktionspufferregister 10. Die im Basisregisterfeld 14 stehende Bitgruppe bezeichnet eine vollständige virtuelle Adresse, deren Distanz in einem der Distanzregister 22 und deren Segment in einem der Segmentregister 24 steht. Durch das Basisregisterfeld 14 wird eines der Distanzregister 22 gewählt und dessen Inhalt dem linken Eingang 30 der ALU 26 zugeleitet. Der Inhalt des Verschiebungsfeldes 16 des Instruktionspufferregisters 10 wird gleichzeitig dem rechten Eingang der ALU 26 zugeleitet. Darauf wird eine Addieroperation in der ALU 26 ausgeführt und die Summe dem Distanzteil 33 des Virtuelladressenregisters 34 zugeleitet. Wird während der Addieroperation durch die Schaltung 31 ein Überlauf festgestellt, so wird dies der Adreßumformerlogik 36 über Leitung 27 mitgeteilt und die Operation angehalten. Gleichzeitig wird der Inhalt des Basisregisterfeldes 14, mit dem ein Distanzregister 22 gewählt wurde, benützt, um ein Segmentregister 24 zu wählen. Der Inhalt des gewählten Segmentregisters wird dem Segmentteil 35 des Virtuelladressenregisters 34 zugeleitet. Je nach Leistungsfähigkeit der verwendeten Schaltelemente entsteht eine Verzögerung, bis das ganze Virtuelladressenregister 34 voll geladen ist. Die ganze virtuelle Adresse im Register 34 wird von der Steuerlogik 36 benützt, um einen Eintrag im Umsetzpuffer 38 auszuwählen, sofern kein Überlaufsignal erscheint. Ein Überlaufsignal auf Leitung 27 zeigt an, daß ein Distanzüberlauf in ein anderes Segment vorliegt, also ein Fehlerzustand herrscht. Der gewählte Eintrag im Umsetzpuffer 38 enthält die umgesetzte Hauptspeicheradresse, mit welcher auf den Hauptspeicher 40 zugegriffen werden kann. Die vom Hauptspeicher unter dieser Adresse geholten Daten werden dem Speicherpufferregister 18 oder 20 zugeleitet, womit die Operation beendigt ist.

**Patentansprüche**

1. Virtuelladressiervorrichtung in einem Computer mit einem Hauptspeicher (40) und einer zentralen Verarbeitungseinheit, die ein aus zwei Teilen (33, 35) bestehendes Virtuelladressenregister zur Aufnahme eines Distanzadreßteils und eines Segmentadreßteils einer virtuellen Adresse, eine Anzahl von Registern (z. B. 22, 24) zur Speicherung von Distanzadreßteilen und Segmentadreßteilen aufweist, wobei die Register unmittelbar von einem ersten Abschnitt (14) eines Instruktionsregisters (10) adressiert werden, das auch einen zweiten Abschnitt (16) zur Abgabe eines Versetzungswertes über einen ersten Kanal (42) an eine Recheneinheit (26) aufweist, welcher über einen zweiten Kanal (44) der Distanzadreßteil aus einem ausgewählten Register zugeführt wird und welche ausgangsseitig über einen dritten Kanal (46) mit dem den Distanzadreßteil aufnehmenden Virtuelladressenregisterteil (33) verbunden ist, gekennzeichnet durch folgende Merkmale:

a) die Recheneinheit (26), der zweite (44) und dritte (46) Kanal sind lediglich zur parallelen Verarbeitung bzw. Übertragung einer der Breite des Distanzadreßteils (33) entsprechenden Anzahl von Bits ausgelegt;

b) die vom Instruktionsregister adressierten, einander entsprechenden Segmentadreßteile sind in Segmentregistern (24) und die Distanzadreßteile in Distanzregistern (22) unterschiedlicher Bauart getrennt gespeichert;

c) ein vierter Kanal (54) verbindet den Ausgang eines adressierten Segmentregisters mit dem Segmentadreßteil (35) des Virtuelladressenregisters.

2. Vorrichtung nach Anspruch 1, dadurch gekennzeichnet, daß die Segmentregister (24) für langsamere Arbeit gebaut sind als die Distanzregister (22).

3. Vorrichtung nach Anspruch 1, gekennzeichnet durch ein Instruktionsadressenregister (32), welches schmaler als das Virtuelladressenregister ist und über den zweiten Kanal (44) mit dem Eingang der Recheneinheit sowie über den dritten Kanal (46) mit deren Ausgang verbunden ist.

4. Vorrichtung nach Anspruch 1, bei der das Virtuelladressenregister (34) zu einem Virtuelladressenumformer (37) gehört, der auch eine Steuerlogik (36) und einen Umsetzpuffer (38) umfaßt, dadurch gekennzeichnet, daß eine Überlaufschaltung (31) vorgesehen ist, die ein Signal abgibt, wenn die Recheneinheit bei der Kombination des Inhaltes des gewählten Distanzregisters und des Inhaltes des zweiten Abschnitts des Instruktionsregisters einen Überlauf erzeugt, und daß eine Blockierleitung (27) vorhanden ist, um die Arbeit des Virtuelladressenumformers zu verhindern, wenn ein Überlauf erfolgt.

**Claims**

1. Virtual addressing apparatus in a computer comprising a main storage (40) and a central processing unit, including a virtual address register consisting of two parts (33, 35) for storing an offset address portion and a segment address portion of a virtual address, a plurality of registers (e. g. 22, 24) for storing offset address portions and segment address portions, said registers being addressed directly from a first section (14) of an instruction register (10) which also includes a second section (16) for furnishing a displacement value via a first path (42) to an arithmetic and logic unit (26), to which (arithmetic and logic unit) the offset address portion from a selected register is furnished via a second path (44), and the output of which (arithmetic and logic unit) is connected via a third path (46) to said virtual address register part (33) receiving said offset address portion, characterized by following features:

a) the arithmetic and logic unit (26), the second (44) and the third (46) path are designed for parallel transfer or processing of a number of bits which corresponds to the width of said offset section (33),

b) the segment address portions which correspond to each other and which are addressed from the instruction register are stored in segment registers (24), and the offset address portions are stored in offset registers (22) of different design,

c) a fourth path (54) connects the output of an addressed segment register to said segment address part (35) said virtual address register.

2. Apparatus in accordance with claim 1, characterized in that said segment registers (24) are designed for slower speed operation than said offset registers (22).

3. Apparatus in accordance with claim 1, characterized by an instruction address register (32) which has a narrower width than said virtual address register, and which is connected via the second path (44) to an input and via the third path (46) to the output of said arithmetic and logic unit.

4. Apparatus in accordance with claim 1, in which said virtual address register (34) is associated to virtual address translation means (37) which also comprise control logic (36) and a translation buffer (38), characterized in that overflow circuitry (31) is provided which furnishes a signal if said arithmetic and logic unit generates an overflow when combining the contents of a selected offset register with the contents of said second section of said instruction register, and that a blocking line (27) is provided to inhibit the working of said virtual address translation means if an overflow occurs.

**Revendications**

1. Dispositif d'adressage virtuel dans un ordinateur comprenant une mémoire principale (40) et une unité centrale de traitement, comportant un registre d'adresse virtuelle composé de deux parties (33, 35) pour recevoir une partie d'adresse de décalage et une partie d'adresse de segment d'une adresse virtuelle, une pluralité de registres (par exemple 22, 24) pour emmagasiner des parties d'adresse de décalage et des parties d'adresse de segment, les registres étant directement adressés par une première section (14) d'un registre d'instruction (10) qui comporte également une seconde section (16) pour fournir une valeur de déplacement par un premier bus (42) à une unité arithméthique et logique (26) qui reçoit par un second bus (44) la partie d'adresse de décalage à partir d'un registre sélectionné et dont la sortie est connectée par un troisième bus (46) à la partie du registre d'adresse virtuelle (33) recevant la partie d'adresse de décalage; ledit dispositif étant caractérisé en ce que:

a) l'unité arithmétique et logique (26), les second (44) et troisième (46) bus sont uniquement conçus pour le traitement ou le transfert en parallèle d'un certain nombre de bits correspondant à la partie d'adresse de décalage (33),

b) les parties d'adresse de segment qui se correspondent et qui sont adressées par le registre d'instruction sont emmagasinées séparément dans les registres de segment (24) et les parties d'adresse de décalage dans des registres à décalage (22) de construction différente,

c) un quatrième bus (54) connecte la sortie d'un registre de segment adressable à la partie d'adresse de segment (35) du registre d'adresse virtuelle.

2. Dispositif selon la revendication 1, caractérisé en ce que les registres de segment (24) sont conçus pour un fonctionnement plus lent que celui des registres à décalage (22).

3. Dispositif selon revendication 1, caractérisé par un registre d'adresse d'instruction (32) qui est plus étroit que le registre d'adresse virtuelle et qui est connecté par le second bus (44) à l'entrée de l'unité arithmétique et logique et par le troisième bus (46) à la sortie de ladite unité arithmétique et logique.

4. Dispositif selon la revendication 1, dans lequel le registre d'adresse virtuelle (34) est associé à un convertisseur d'adresse virtuelle (37) qui comporte également une logique de commande (36) et une mémoiretampon de conversion (38), caractérisé en ce qu'il est prévu un circuit de débordement (31) fournissant un signal lorsque l'unité arithmétique et logique provoque un débordement en combinant le contenu du registre à décalage sélectionné avec le contenu de la seconde section du registre d'instruction, et en ce qu'il est prévu une ligne de blocage (27) pour empêcher le fonctionnement du convertisseur d'adresse virtuelle lors d'un débordement.

## FIG. 1A

R REGISTER
N BITS BREIT

LSR — RxN BITS

N BITS BREIT — ALU

## FIG. 1B

R REGISTER
M BITS BREIT

LSR

$R \times P \times M = R \times N$ BITS

M BITS BREIT — ALU

P DURCHLÄUFE PRO ADRESSIERUNG

## FIG. 2

DISTANZ-REGISTER  22

ALU  26

31  ÜBERLAUF

32  IAR

24  SEGMENT-REGISTER

V A U  37

HAUPT-SPEICHER  40

SCHNITT-STELLE

7

# FIG. 3